# EUROPÄISCHE PATENTSCHRIFT

(11) **EP 4 337 479 B1**
(45) Veröffentlichungstag und Bekanntmachung des Hinweises auf die Patenterteilung: **09.04.2025**
(21) Anmeldenummer: 22709946.2
(22) Anmeldetag: 28.02.2022
(51) Int. Cl.: B60H 1/00

(54) **KLIMAGERÄT ZUR MONTAGE AUF EINEM DACH**
AIR-CONDITIONING DEVICE FOR INSTALLING ON A ROOF
DISPOSITIF DE CLIMATISATION DESTINÉ À ÊTRE INSTALLÉ SUR UN TOIT

(30) Priorität: 12.05.2021 DE 102021002510
(43) Veröffentlichungstag der Anmeldung: 20.03.2024
(73) Patentinhaber: Truma Gerätetechnik GmbH & Co. KG, 85640 Putzbrunn (DE)
(72) Erfinder: BEYER, Andreas, 85640 Putzbrunn (DE)
(74) Vertreter: Prinz & Partner mbB
(86) Internationale Anmeldenummer: PCT/EP2022/000021
(87) Internationale Veröffentlichungsnummer: WO 2022/237997

(56) Entgegenhaltungen:
- CN-A- 103 090 468
- DE-A1- 102019 212 949
- US-A1- 2021 061 060

## Beschreibung

Die vorliegende Erfindung betrifft ein Klimagerät zum Temperieren, insbesondere Kühlen eines Raumes. Das Klimagerät ist dabei zur Montage auf einem Dach, z. B. auf dem Dach eines Fahrzeugs (z. B. eines Wohnmobils oder eines Wohnwagens) ausgestaltet. Eine Bezeichnung für ein solches Klimagerät ist daher auch Dachklimaanlage.

Das der Luftkühlung zugrundeliegende Prinzip der Kälteerzeugung mittels eines Kühlkreislaufs ist beispielsweise in der WO 2007/042065 A1 beschrieben. Bei sogenannten Aufdachklimaanlagen, die z. B. bei Wohnwagen oder Wohnmobilen zur Anwendung kommen, sind die Komponenten zur Erzeugung des Kühlkreislaufs (also Gebläse, Wärmetauscher, Verdampfer, Verflüssiger) in einem Gehäuse auf dem Dach des Fahrzeugs angebracht. In dem Fahrzeug befindet sich lediglich ein Innenluftverteiler.

Die Aufdachklimaanlagen beinhalten dabei diverse Versteifungselemente, die im Gehäuse integriert sind. Für die Befestigung auf dem Dach wird die Klimaanlage mit dem Dach verspannt. Dies geschieht dadurch, dass Befestigungselemente im Fahrzeuginneren mit den Versteifungselementen der Anlage verschraubt werden. An den Befestigungselementen im Fahrzeuginneren und somit unterhalb des Dachs wird der Innenluftverteiler befestigt. Dabei befinden sich der Innenluftverteiler und das Gehäuse insbesondere in einem Bereich um eine Aussparung im Dach für den Austausch von Luft zwischen den Komponenten im Gehäuse und dem Innenluftverteiler.

Bekannt ist es beispielsweise aus der DE 20 2011 003 575 U1, Versteifungselemente in einer dem Gehäuse zugeordneten sogenannten Unterschale vorzusehen. Dadurch wird zum einen die Unterschale versteift. Zum anderen wird an den Versteifungselementen das Gehäuse mit zwei Befestigungselementen im Fahrzeuginneren verschraubt. Dadurch wird das Gehäuse mit dem Dach verspannt. In der Klimaanlage gemäß der EP 3 411 250 B1 ist ein Rahmen vorhanden, der im Dachausschnitt zur Positionierung der Klimaanlage und gleichzeitig zur Abdichtung verwendet wird. Weitere Ausgestaltungen von Klimaanlagen oder Luftaustauschvorrichtungen offenbaren beispielsweise die DE 18 40 118 U, die EP 0 668 475 A1 oder die EP 2 418 434 A1.

Die DE 10 2019 212949 A1 und die US 2021/061060 A1 zeigen Befestigungen von AufdachKlimaanlagen mit Befestigungselementen.

Nachteilig am Stand der Technik ist die teilweise sehr aufwendige Integration der Versteifungselemente in der Unterschale. Meist werden mehrere Bauteile verwendet, die miteinander verschraubt werden. Dazu kommen zusätzliche Befestigungselemente im Fahrzeuginneren. Diese Vielzahl von Elementen erschwert die Montage. Überdies ist darauf zu achten, dass z. B. das Verschrauben jeweils mit den erforderlichen Kräften vorgenommen wird.

Die der Erfindung zugrundeliegende Aufgabe besteht daher darin, ein Klimagerät vorzuschlagen, das sich im Gegensatz zum Stand der Technik durch eine möglichst einfache Montage auszeichnet.

Die Erfindung löst die Aufgabe durch ein Klimagerät zur Montage auf einem Dach mit einem Gehäuse, einem Innenluftverteiler und zwei Rahmeneinheiten, wobei die zwei Rahmeneinheiten gleich ausgestaltet sind, wobei jede Rahmeneinheit eine erste Seite und eine zweite Seite aufweist, und wobei in einem montierten Zustand die zwei Rahmeneinheiten zwischen dem Gehäuse und dem Innenluftverteiler angeordnet sind und eine Rahmeneinheit als obere Rahmeneinheit und die andere Rahmeneinheit als untere Rahmeneinheit dient, und wobei in dem montierten Zustand die ersten Seiten der zwei Rahmeneinheiten einander zugewandt sind und die zweite Seite der oberen Rahmeneinheit dem Gehäuse und die zweite Seite der unteren Rahmeneinheit dem Innenluftverteiler zugewandt ist.

Bei dem erfindungsgemäße Klimagerät ist somit eine sogenannte Dachklimaanlage, bei welcher sich die Komponenten, die den Kältekreislauf bilden, in einem Gehäuse auf dem Dach z. B. eines Fahrzeugs befinden. In dem Raum, der durch das Klimagerät temperiert werden soll, befindet sich nur ein Innenluftverteiler, durch den die temperierte Luft in den Raum eingebracht und vorzugsweise auch die zu temperierende Luft aufgenommen wird. Die zwei Rahmeneinheiten befinden sich im montierten Zustand zwischen dem Gehäuse - auf dem Dach - und dem Innenluftverteiler - unterhalb des Dachs - und liegen vorzugsweise jeweils direkt auf dem Dach - d.h. auf der Ober- bzw. Unterseite - an. Die zwei Rahmeneinheiten bilden somit die zwei Auflageflächen des Klimageräts an einem Dach. Die zwei Rahmeneinheiten sind Gleichteile, die im montierten Zustand jeweils umgekehrte Einbaulagen aufweisen. Hierfür verfügen die Rahmeneinheiten jeweils über zwei Seiten, die hier für die Unterscheidung als erste und zweite Seite bezeichnet werden und sich hinsichtlich ihrer jeweiligen Geometrie voneinander unterscheiden. Im montierten Zustand sind die beiden ersten Seiten einander zugewandt. Durch die Rahmeneinheiten wird im montierten Zustand das Klimagerät in sich versteift und mit dem Dach verspannt. Zudem lässt sich der Innenluftverteiler an der Unterseite befestigen. Ausgehend von der Verwendung für die Befestigung an einem Dach befindet sich eine Rahmeneinheit oberhalb des Dachs und die andere unterhalb des Dachs. Damit sind die zweiten Seiten der Rahmeneinheiten dem Gehäuse bzw. dem Innenluftverteiler zugewandt.

Die zwei Rahmeneinheiten sind in einer Ausgestaltung im Wesentlichen als eine Art von flachem Ring ausgeführt. Die Außenkontur ist dabei in einer Variante rechteckig, wobei die Ecken abgerundet sein können. In einer Ausgestaltung ist auch die Innenkontur des Rings rechteckig ausgeführt.

Die weiteren Ausgestaltungen beschreiben Teile der Geometrien der zwei Seiten der Rahmeneinheiten.

Eine Ausgestaltung sieht vor, dass die Rahmeneinheiten jeweils einen inneren Rand aufweisen, der jeweils eine Innenaussparung umschließt. Die Rahmeneinheiten haben somit eine Art von Ringform. Durch die Innenaussparung erfolgt in einer Variante der Luftaustausch zwischen dem Gehäuse - oder genauer: zwischen dem im Gehäuse durch die Komponenten erzeugten Kältekreislauf - und dem Innenluftverteiler. Durch die Innenaussparung gelangt somit die zu temperierende Luft vom Innenluftverteiler in das Gehäuse und gelangt umgekehrt die temperierte Luft vom Gehäuse zum Innenluftverteiler. Der innere Rand, der die Innenaussparung umgibt, weist in einer Variante eine solche Höhe auf, sodass er bei der Montage des Klimageräts als Anschlag in der durchgehenden Aussparung im Dach dienen kann. Der innere Rand stößt somit an der Dachaussparung an und die Rahmeneinheit selbst liegt auf dem Dach bzw. unter dem Dach auf. Der innere Rand erleichtert also die Montage.

Eine Ausgestaltung beinhaltet, dass die Rahmeneinheiten jeweils mehrere Montageaussparungen zur Aufnahme von Montageelementen aufweisen, und dass zumindest eine Montageaussparung eine Fixierung eines eingebrachten Montagelements erlaubt. Die Montageelemente sind beispielsweise standardisierte oder allgemein übliche Teile wie Schrauben, Bolzen, Muttern oder Unterlegscheiben. Die Montageaussparungen sind beispielsweise durchgehende Aussparungen, durch welche Montageelemente durch die Rahmeneinheiten hindurchgeführt sind. Mindestens eine Montageaussparung erlaubt eine Fixierung des eingebrachten Montageelement. So sind beispielsweise einige der Montageaussparungen so für die Fixierung eines eingebrachten Montageelements ausgeführt, dass bei der Montage des Klimageräts die Montageelemente vor der Positionierung der jeweiligen Rahmeneinheit - relativ zum Dach - in die Montageaussparungen eingebracht und für die weitere Montage dort gehalten werden.

Eine Ausgestaltung sieht vor, dass sich die Fixierung durch Form- und/oder Kraftschluss zwischen der Montageaussparung und dem Montageelement ergibt. Dies ist beispielsweise dadurch gegeben, dass das Montageelement geringfügig größer als die zugehörige Montageaussparung ist.

In einer alternativen oder ergänzenden Ausgestaltung ist vorgesehen, dass sich die Fixierung dadurch ergibt, dass der Montageaussparung ein Klemmhaken zugeordnet sind. Ein solcher Klemmhaken ist beispielsweise elastisch verformbar, sodass das Montageelement eingebracht und dann gehalten wird.

Einige Montageelemente werden also beispielsweise in die Montageaussparungen eingeclipst. Das Einclipsen wird dabei in einer Ausgestaltung dadurch realisiert, dass die Montageelemente gegenüber den Montageaussparungen ein geringes Übermaß aufweisen. So wird beispielsweise eine mehreckige Mutter als Montageelement in eine Montageaussparung mit gleich vielen Ecken eingebracht. Durch das Übermaß wird die Mutter fest in der Aussparung gehalten. In einer alternativen oder ergänzenden Ausgestaltung ist ein elastisch verformbares Element vorhanden, welches sich beim Einbringen des Montageelements in die Montageaussparung elastisch verformt, um dann in eine Ruheposition zurückzukehren, die es verhindert, dass das Montageelement ohne ein erneutes Verformen des Elements aus der Montageaussparung gelangt. Somit müssen bei der Montage weniger Elemente gehalten und positioniert werden. Die Rahmeneinheiten tragen gleichsam die Montageelemente mit sich mit. Dies vereinfacht die Montage.

Die folgende Ausgestaltung bezieht sich insbesondere darauf, dass die Rahmeneinheiten mit zwei unterschiedlichen Orientierungen zur Anwendung kommen.

Daher ist gemäß einer Ausgestaltung mindestens eine Montageaussparung als durchgehende Aussparungen ausgestaltet, welche auf der ersten Seite der Rahmeneinheit eine Geometrie aufweist, die sich von der Geometrie auf der zweiten Seite der Rahmeneinheit unterscheidet. So sieht es beispielsweise eine Ausgestaltung vor, dass eine Geometrie einer Montageaussparung eine Fixierung beispielsweise einer Mutter erlaubt. Auf der anderen Seite ist diese Geometrie nicht erforderlich, da von dieser Seite z. B. eine Schraube oder ein Bolzen eingebracht wird. Daher handelt es sich um durchgehende Aussparung als Teil der Montageaussparung. Dies erlaubt es, dass mit den Rahmeneinheiten die gleichen Verschraubungspunkte verwendet werden. Die Verschraubungspunkte erlauben das Verspannen bzw. das Versteifen des Klimageräts in sich selbst bzw. am Dach und ermöglichen andererseits im Innenraum die Befestigung des Innenluftverteilers.

Eine Ausgestaltung besteht darin, dass die Rahmeneinheiten auf mindestens einer Seite jeweils mindestens ein Versteifungselement aufweisen. Das Versteifungselement ist erforderlich aufgrund der durch die Montage oder auch durch die auf das Gehäuse - z. B. Fahrtwind - wirkenden Kräfte.

Im Folgenden werden einzelne Umsetzungen des Versteifungselements diskutiert. Dabei können auch mehrere Ausgestaltungen miteinander kombiniert werden, sodass die Rahmeneinheiten jeweils mehrere unterschiedliche Versteifungselemente aufweisen.

Eine Ausgestaltung sieht vor, dass mehrere Versteifungselemente vorhanden sind, und dass die Versteifungselemente Materialanhäufungen mit einer im Wesentlichen identischen Geometrie sind. Die Versteifungselement sind beispielsweise von dreieckiger Form, wobei sich zwischen den einzelnen Versteifungselementen Freiräume befinden, durch die auch eine gewisse Elastizität gegeben ist. In einer Ausgestaltung bilden die Versteifungselemente eine Art von Labyrinth-Geometrie. Die Labyrinth-Struktur wird in einer Ausgestaltung dadurch gebildet, dass sich dreieckige Form gegenüberliegen, sodass jeweils eine Ecke eines Dreiecks zwischen den Seitenflächen von zwei umgekehrt liegenden Dreiecken liegt. Zwischen den als Erhebungen ausgeführten Dreiecken befinden sich dabei die Bahnen des Labyrinths.

Eine alternative oder ergänzende Ausgestaltung beinhaltet, dass das Versteifungselement als zumindest teilweise ringförmige Umfassung einer Montageaussparung mit sich sternförmig anschließenden Stegen ausgestaltet ist. In dieser Ausgestaltung wird eine Montageaussparung zumindest teilweise ringförmig umschlossen. Der Ring kann dabei geschlossen oder als Teilring realisiert sein. Von diesem Ring, der beispielsweise auch als flacher Kreiszylinder ausgestaltet sein kann, erstrecken sich einzelne Stege sternförmig nach außen. Dies dient der Ableitung der Kräfte fort von der Montageaussparung sowie des im montierten Zustand sich darin befindlichen Montageelements.

Eine alternative oder ergänzende Ausgestaltung sieht vor, dass das Versteifungselement als Quertraverse (oder alternativ bezeichnet: Querstrebe) ausgestaltet ist. Die Quertraverse überdeckt in einer Ausgestaltung den Bereich der Innenaussparung. Die Quertraverse befindet sich dabei in einer Ausgestaltung im inneren des Gehäuses. Die Quertraverse bildet also in einer Variante eine Innenverbindung zwischen zwei parallelen Seiten der Rahmeneinheit über die mittlere Aussparung hinweg.

Eine Ausgestaltung besteht darin, dass die Rahmeneinheiten auf einer Seite jeweils mindestens eine Vertiefung für eine Dichtkomponente aufweisen. Diese Vertiefung erlaubt z. B. die Befestigung - z. B. durch Verkleben - einen Schaumstoffelements auf der dem Innenluftverteiler zugewandten Seite zur Geräuschentkopplung. Ein solches Schaumstoffelement dient alternativ oder ergänzend für die Abdichtung zwischen der Rahmeneinheit und dem Dach, auf welchem die Klimaanlage montiert wird.

Eine Ausgestaltung sieht vor, dass die Rahmeneinheiten auf einer Seite jeweils mindestens eine Abdichtstruktur aufweisen, die als mindestens eine Erhebung ausgestaltet ist. Die Abdichtstruktur verhindert den Eintritt von Wasser. Die Abdichtstruktur befindet sich vorzugsweise auf der zweiten Seite der Rahmeneinheiten. Insbesondere bei der oberen Rahmeneinheit, die sich durch die Montage auf dem Dach außerhalb des geschützten Raumes des Fahrzeugs befindet, hat die Abdichtstruktur den Vorteil, dass das Eindringen von Wasser verhindert wird. Insbesondere soll dabei verhindert werden, dass Wasser - z.B. Regenwasser - über die Innenaussparung der Rahmeneinheit in den Innenluftverteiler und in den Innenraum unterhalb des Dachs gelangt. Die Abdichtstruktur greift im montierten Zustand in das Gehäuse ein und bewirkt damit die Abdichtung des Gehäuses gegenüber der Oberseite des Dachs. Unterhalb des Dachs erlaubt die Abdichtstruktur eine erleichtere Positionierung des Innenluftverteilers relativ zur unteren Rahmeneinheit.

Eine Ausgestaltung sieht vor, dass auf einer Außenseite der Abdichtstruktur mindestens eine Freifläche vorhanden ist, welche nach außen hin offen und vorzugsweise geneigt ist.

Eine solche Freifläche dient beispielsweise dazu, dass Kondensationswasser aus dem Gehäuse abfließen kann und über die Freifläche nach außen fortgeleitet wird. Daher befindet sich die Freifläche außerhalb des Bereichs, den die Abdichtstruktur umschließt. In einer Ausgestaltung sind zwei Freiflächen vorhanden, die vorzugsweise symmetrisch zueinander angeordnet sind. Entsprechend zu der Anordnung der Freifläche oder der Freiflächen befindet sich in dem Gehäuse oberhalb der Freifläche bzw. der Freiflächen mindestens eine Öffnung für das Kondensat.

Gemäß einer Ausgestaltung weisen die Rahmeneinheiten auf einer Seite jeweils mindestens einen entfernbaren Dom auf. Die Dome erheben sich von der Fläche der jeweiligen Seite der Rahmeneinheiten. Sie sind derartig ausgestaltet, dass sie sich relativ einfach und ohne allzu großen Aufwand entfernen lassen. Sie sind also beispielsweise schmal oder verfügen über eine Sollbruchstelle. In einer Ausgestaltung befinden sich die Dome in einem gewissen Abstand zu der Innenaussparung der Rahmeneinheiten. In einer Ausgestaltung verfügen die Rahmeneinheiten jeweils über mindestens zwei Dome, die sich in unterschiedlichen Abständen zur Innenaussparung mit zunehmenden Abständen befinden. Diese Dome dienen in einer Ausgestaltung bei größeren Dachaussparungen als Anschlagsflächen oder Anschlagskomponenten. Somit fungiert in einer Ausgestaltung der innere Rand um die Innenaussparung als Anschlagsfläche für eine erste Größe einer Aussparung in dem Dach, auf dem das Klimagerät installiert werden soll. Die Dome befinden sich weiter außen. Daher lassen sie sich verwenden, wenn die Aussparung im Dach größer ist. Für die Montage bei einer kleineren Aussparung werden die Dome vorzugweise entfernt, sodass sie nicht aufliegen.

Alternativ oder ergänzend ist vorgesehen, dass die Rahmeneinheiten auf einer Seite jeweils mindestens eine Hinweisvorrichtung aufweisen. Die Hinweisvorrichtung ist beispielsweise ein eingeprägter Pfeil und/oder eine Beschriftung. Die Hinweisrichtung ist vorzugsweise so angeordnet, dass sie bei der Montage des Klimageräts durch einen Dachausschnitt gesehen werden kann und damit der Ausrichtung dient.

Eine Ausgestaltung beinhaltet, dass die Rahmeneinheiten jeweils einteilige Kunststoffspritzgussbauteile sind. Solche Kunststoffspritzgussteile erlauben eine große Formvielfalt, haben dabei ein geringes Gewicht und sind meist kostengünstig herzustellen.

Eine Ausgestaltung des Klimageräts sieht vor, dass in dem Gehäuse ein Kompressor, ein Verflüssiger, eine Expansionseinrichtung und ein Verdampfer angeordnet sind und einen Kühlkreislauf bilden. Gemäß dieser Ausgestaltung sind alle Komponenten für die Erzeugung eines Kühlkreislaufs in dem Gehäuse und damit außerhalb des Raums angeordnet.

Im Einzelnen gibt es eine Vielzahl von Möglichkeiten, das erfindungsgemäße Klimagerät auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. Es zeigen:
- Fig. 1: eine schematische Darstellung eines auf einem Dach installierten Klimageräts,
- Fig. 2: eine Draufsicht auf die zweite Seite einer Rahmeneinheit,
- Fig. 3: einen Schnitt durch einen Teil eines montierten Klimageräts entlang der in der Fig. 2 eingezeichneten Achse,
- Fig. 4: eine Draufsicht auf die erste Seite der Rahmeneinheit der Fig. 2,
- Fig. 5: eine Sicht auf eine zweite Seite einer alternativen Ausgestaltung einer Rahmeneinheit,
- Fig. 6: eine Sicht auf die erste Seite der Ausgestaltung der Rahmeneinheit der Fig. 5,
- Fig. 7: einen vergrößerten Ausschnitt der Fig. 6,
- Fig. 8: einen vergrößerten Ausschnitt der Fig. 5,
- Fig. 9: einen weiteren vergrößerten Ausschnitt der Fig. 7 und
- Fig. 10: eine Draufsicht auf eine zweite Seite einer weiteren Ausgestaltung der Rahmeneinheit.

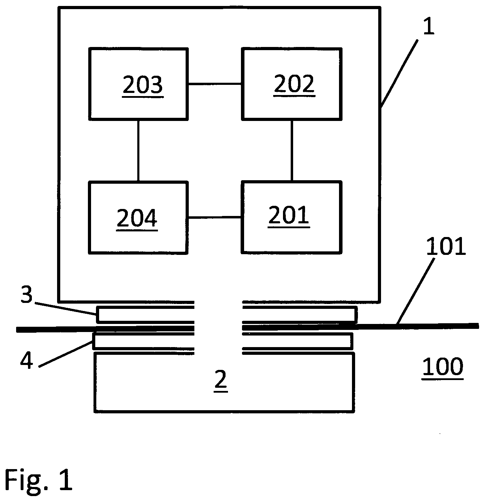

Die Fig. 1 zeigt schematisch den Aufbau eines Klimageräts zum Kühlen eines Raumes 100, der sich unterhalb einem Dach 101 befindet.

Der damit realisierte Kühlkreislauf oder Kälteprozess ist beispielsweise in der WO 2007/042065 A1 beschrieben. In dem Kühlkreis verdichtet ein Kompressor (eine alternative Bezeichnung ist Verdichter) 201 ein gasförmiges Kältemittel, das sich erwärmt und über eine Kältemittelleitung zu einem Verflüssiger (alternative Bezeichnung: Kondensator) 202 transportiert wird. Im Verflüssiger 202 wird die Wärme des Kältemittels - über einen Wärmetauscher - an die Umgebungsluft (oder Außenluft) aus der Umgebung um den Raum herum abgegeben. Das flüssige und weiterhin unter hohem Druck stehende Kältemittel wird in einer Expansionseinrichtung 203, die z. B. als Drossel ausgestaltet ist, auf einen niedrigeren Druck entspannt, wodurch es abkühlt. Im Verdampfer 204 wird über einen weiteren Wärmetauscher die Luft gekühlt, indem sie ihre thermische Energie auf das Kältemittel überträgt. Dadurch geht das Kältemittel in den gasförmigen Zustand über. Das gasförmige Kältemittel gelangt schließlich zurück zu dem Kompressor 201, sodass der Kühlkreislauf fortgeführt werden kann. Der Kreislauf lässt sich auch umkehren, sodass die Vorrichtung als Raumheizung dient.

Bei dem Raum 100 handelt es sich beispielsweise um den Innenraum eines Wohnwagens oder eines Wohnmobils. Die Komponenten des Klimageräts zur Realisierung des Kälteprozesses befinden sich in dem Gehäuse 1, das auf dem Dach 101 aufliegt. In dem Raum 100 befindet sich der Innenluftverteiler 2, über den Luft aus dem Raum 100 - als zu temperierende Luft - abgeführt und über den die durch das Klimagerät temperierte Luft in den Raum 100 eingebracht wird. Der Luftverteiler 2 ist dabei an der Innenseite des Dachs 101 angebracht. Zwischen den Komponenten im Gehäuse 1 auf dem Dach 101 und dem Innenluftverteiler 2 unter dem Dach 101 befindet sich eine durchgehende Deckenaussparung. Durch die Aussparung gelangt die zu temperierende Luft in das Gehäuse 1 (bzw. zu den darin befindlichen Komponenten) und gelangt die temperierte Luft aus dem Gehäuse 1 in den Luftverteiler 2. Der direkte Kontakt zwischen dem Gehäuse 1 und dem Innenluftverteiler 2 und dem Dach 101 erfolgt über die zwei Rahmeneinheiten 3, 4.

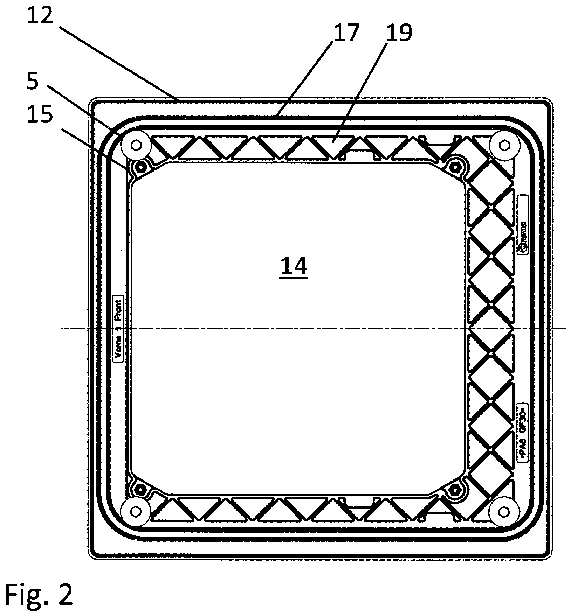

Die Fig. 2 zeigt eine zweite Seite 12 einer Rahmeneinheit. Diese zweite Seite 12 ist im montierten Zustand dem Gehäuse bzw. dem Innenluftverteiler zugewandt. Mit anderen Worten: Die zweite Seite 12 ist jeweils von dem Dach abgewandt.

Die Außenkontur ist rechteckförmig und auch die Innenaussparung 14 ist rechteckförmig. Die Innenaussparung 14 ist von mehreren Versteifungselementen 19 umgeben, die aus einer Reihe von Dreiecken und Quadraten besteht. Die Dreiecke sind jeweils abwechselnd mit einer Spitze bzw. einer Basisseite der Innenaussparung 14 zugewandt. Radial weiter außen ist eine umlaufende Abdichtstruktur 17 vorhanden, der zur Abdichtung gegenüber Flüssigkeit von außen dient. Weiter radial außerhalb ist eine Vertiefung um die Abdichtstruktur 17 herum zu erkennen, in welchem im montierten Zustand ein Dichtelement eingebracht ist.

Zu erkennen sind auch vier Unterlegscheiben, die Schrauben in durchgehenden Aussparungen zugeordnet sind und als Montageelemente 5 dienen. Die Montageelemente 5 - also Schrauben, Mutter, Unterlegscheiben oder Bolzen - sind übliche Standardkomponenten, die entsprechend in die Rahmeneinheiten eingebracht sind und bei der Montage der Befestigung dienen.

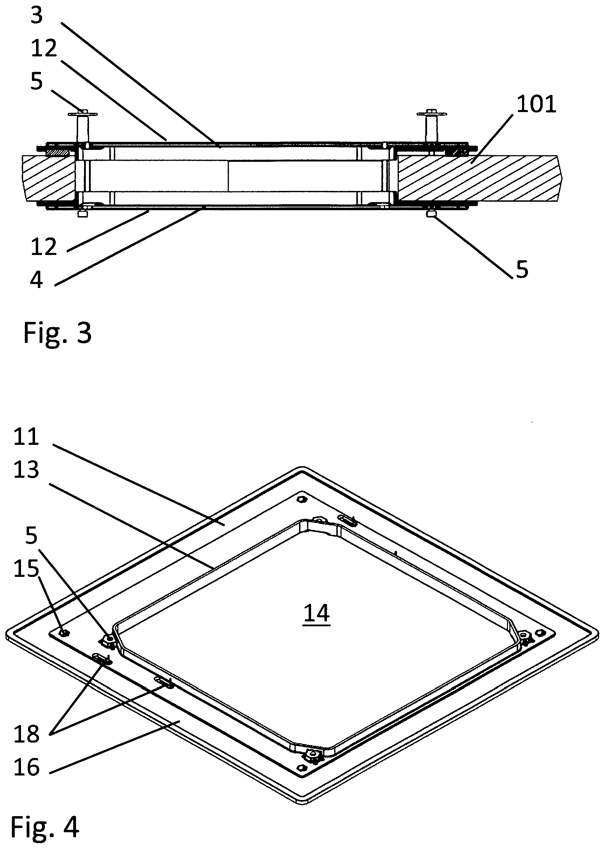

Den Schnitt entlang der in der Fig. 2 eingezeichneten Linie zeigt die Fig. 3.

Zu sehen ist, wie sich das Dach 101 im gezeigten montierten Zustand zwischen den zwei Rahmeneinheiten 3, 4 befindet. Die zweiten Seiten 12 sind jeweils voneinander und auch von dem Dach 101 abgewandt. Zu erkennen sind weiterhin die unterschiedlichen Montageelemente 5, die über die Ebene der Rahmeneinheiten 3, 4 hinausragen und für das Gehäuse bzw. den Innenluftverteiler genutzt werden.

Die Fig. 4 zeigt eine erste Seite 11, die im montierten Zustand auf dem Dach 101 des Fahrzeugs aufliegt und sich deutlich von der zweiten Seite 12 der Fig. 2 unterscheidet.

Umfasst wird die Innenaussparung 14 von einem erhabenen inneren Rand 13. Dieser hat eine solche Höhe, sodass er in der Dachaussparung als Anschlagsfläche dienen kann. Radial weiter außen befinden sich schmale Dome 18, die bei größeren Dachaussparungen als Anschläge fungieren und die sich aufgrund ihrer schmalen Ausführung ggf. leicht entfernen lassen.

Weiter radial außerhalb befindet sich eine Vertiefung 16, in welche - für die Montage - eine Dichtkomponenten oder eine andere Dämpfungskomponente eingebracht werden kann. An den vier Ecken vor der Vertiefung 16 befindet sich jeweils eine Montageaussparung 15, in welche jeweils eine Mutter als Montageelement eingebracht werden kann. Dabei ist die Form der Montageaussparung 15 derart, dass das entsprechende Montageelement 5 unverlierbar gehalten wird. Diese Montageaussparungen 15 sind nur auf der gezeigten ersten Seite 11 für die Muttern ausgeführt. Auf der Gegenseite, d.h. auf der zweiten Seite 12 handelt es sich nur um eine durchgehende Aussparung, da dort keine Mutter als Montageelement vorgesehen ist. Weiterhin sind unmittelbar an dem inneren Rand 13 weitere Montageelemente 5 zu erkennen.

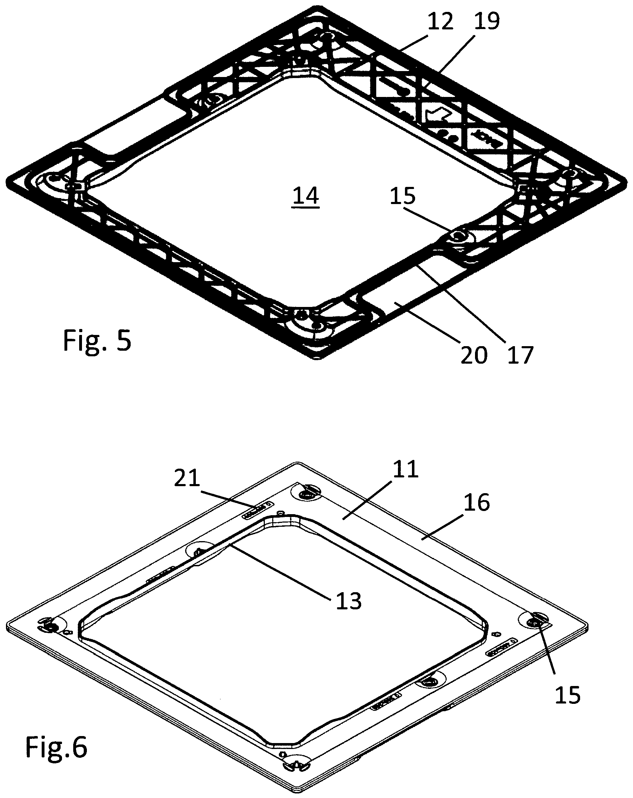

Die Fig. 5 bis 9 zeigen eine alternative Ausgestaltung einer Rahmeneinheit. Dabei werden im Folgenden nur die Unterschiede beschrieben.

Die Versteifungselemente 19 sind auf der in der Fig. 5 dargestellten zweiten Seite 12 durch Streben gebildet, die jeweils Dreiecksflächen sowie zu Rechtecken zusammengeführte Dreiecksflächen umschließen. Die Abdichtstruktur 17 hat an zwei einander symmetrisch gegenüberliegenden Seiten einen Rücksprung, sodass eine Freifläche 20 umfasst wird. Die Freifläche 20 ist nach außen hin offen und wird somit nicht von der Abdichtstruktur 17 umgeben. Die Freifläche 20 ist dabei leicht nach außen abfallend geneigt, sodass Flüssigkeit nach außen geführt wird. Im montierten Zustand befinden sich die Freiflächen 20 jeweils unterhalb von Löchern im Gehäuse, durch die Kondensatwasser abfließen kann. Die Montageaussparungen 15 ergeben sich hier als Erhöhungen. Die Innenaussparung 14 ist auch hier von einem inneren Rand 13 umgeben, der gut in der Fig. 6 zu erkennen ist.

Auf der ersten Seite 11 der Fig. 6 ist zu erkennen, dass insgesamt sechs Montageaussparungen 15 für die Montage auf dem Dach vorhanden sind. Die Vertiefung 16 für ein Dichtelement umgibt den gesamten Bereich, in dem sich die Montageaussparungen 15 befinden. Anstelle der Dome 18 der Ausgestaltung der Fig. 4 sind hier Hinweisvorrichtungen 21 für die Montage der Rahmeneinheit in Bereich einer Dachaussparung vorhanden.

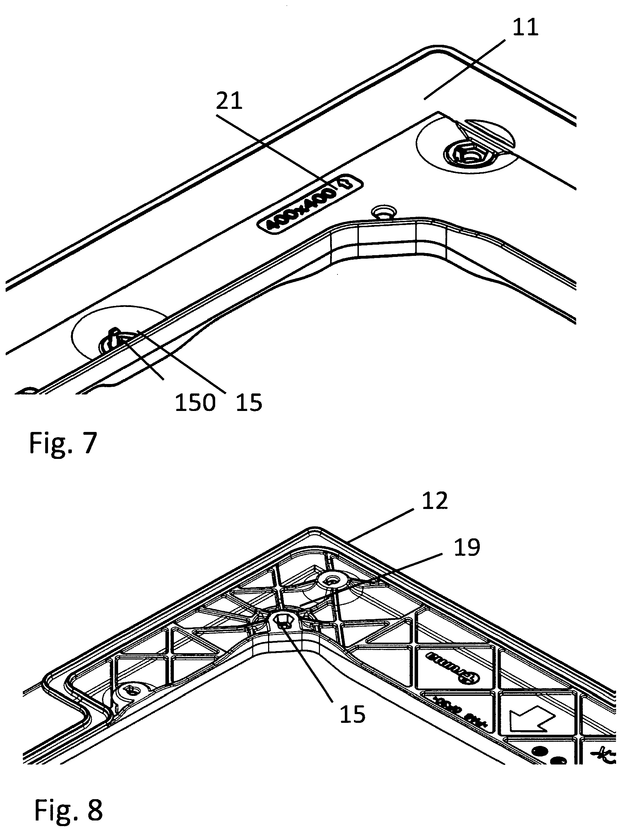

Die Fig. 7 zeigt eine solche Hinweisvorrichtung 21 auf der ersten Seite 11. Dabei handelt es sich hier beispielhaft um einen Pfeil mit der Größenangabe des Dachausschnitts. Der Pfeil gibt dabei den Bereich an, bis zu welchem die Rahmeneinheit bei einem Dachausschnitt der angegebenen Größe passend angebracht wird. Zu erkennen ist in der Montageaussparung 15 der Klemmhaken 150. Wird beispielsweise eine Mutter in die Montageaussparung 15 eingebracht, so wird der Klemmhaken 150 in einer Ausgestaltung leicht elastisch verbogen, sodass die Mutter anschließend auch nur dann herausfallen könnte, wenn eine Kraft gegen den Klemmhaken 150 ausgeführt wird. Alternativ oder ergänzend sind die Abmessungen von Montageaussparung 15, Klemmhaken 150 und zugeordnetem Montageelement so, dass das Montagelement durch den Klemmhaken 150, der sich hier mit einem oberen Ende radial nach innen erstreckt, in eine Bewegungsrichtung (insbesondere in Fallrichtung) blockiert wird.

In der Fig. 8 sind auf der zweiten Seite 12 die Versteifungselemente 19 zu erkennen, die sich hier um eine Montageaussparung 15 befinden. Ausgehend von einer teilweise geöffneten ringähnlichen Struktur erstrecken sich strahlenförmig Streben fort von dem Montageaussparung 15.

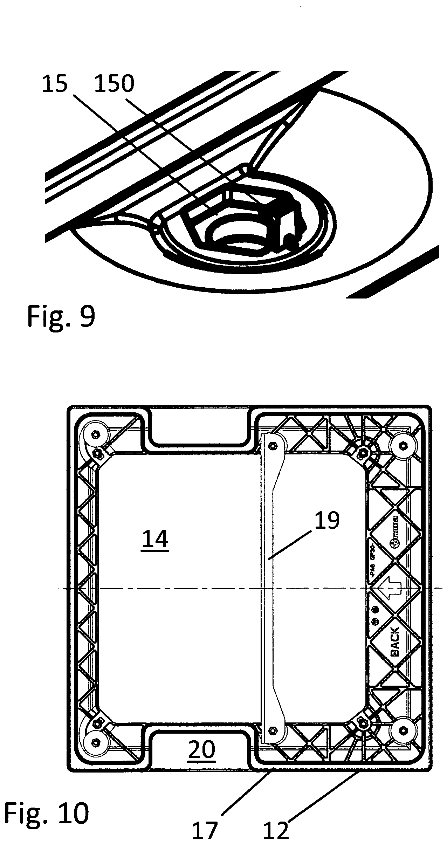

Die Fig. 9 zeigt eine Montageaussparung 15, an welche sich ein Klemmhaken 150 anschließt. Der Klemmhaken 150 verläuft dabei zunächst ausgehend von der Montageaussparung 15 in Richtung der Seitenflächen der Montageaussparung 15 und ragt mit einer Endseite nach innen. Damit wird ein eingebrachtes Montageelement am Herausfallen gehindert.

Die Fig. 10 zeigt anhand einer zweite Seite 12, wie die Freiflächen 10 außerhalb der Abdichtstruktur 17 liegen. Weiterhin sind drei unterschiedliche Versteifungselemente 19 zu erkennen. Dies sind einmal die Stege, die die geometrischen Grundformen bilden: hier auf der linken Seite Dreiecke und auf der rechten Seite Dreiecke und Quadrate. Zudem sind die Montageaussparungen von der teilringförmigen Struktur umgeben, an die sich strahlenförmig Stege anschließen. Zudem ist noch eine Quertraverse vorhanden, die hier über die Innenaussparung 14 hinweg eine innere Versteifung bewerkstelligt. Die Quertraverse befindet sich dabei im Gehäuse oberhalb der Rahmeneinheiten.

### Bezugszeichenliste

- **1**: Gehäuse
- **2**: Innenluftverteiler
- **3**: obere Rahmeneinheit
- **4**: untere Rahmeneinheit
- **5**: Montageelement
- **11**: erste Seite
- **12**: zweite Seite
- **13**: innerer Rand
- **14**: Innenaussparung
- **15**: Montageaussparung
- **16**: Vertiefung
- **17**: Abdichtstruktur
- **18**: Dom
- **19**: Versteifungselement
- **20**: Freifläche
- **21**: Hinweisvorrichtung
- **100**: Raum
- **101**: Dach
- **150**: Klemmhaken
- **201**: Kompressor
- **202**: Verflüssiger
- **203**: Expansionseinrichtung
- **204**: Verdampfer

## Patentansprüche

1. Klimagerät zur Montage auf einem Dach (101),
mit einem Gehäuse (1), einem Innenluftverteiler (2) und zwei Rahmeneinheiten (3, 4),
wobei jede Rahmeneinheit (3, 4) eine erste Seite (11) und eine zweite Seite (12) aufweist,
wobei in einem montierten Zustand die zwei Rahmeneinheiten (3, 4) zwischen dem Gehäuse (1) und dem Innenluftverteiler (2) angeordnet sind und eine Rahmeneinheit als obere Rahmeneinheit (3) und die andere Rahmeneinheit als untere Rahmeneinheit (4) dient, und
wobei in dem montierten Zustand die ersten Seiten (11) der zwei Rahmeneinheiten (3, 4) einander zugewandt sind und die zweite Seite (12) der oberen Rahmeneinheit (3) dem Gehäuse (1) und die zweite Seite (12) der unteren Rahmeneinheit (4) dem Innenluftverteiler (2) zugewandt ist, **dadurch gekennzeichnet dass** die zwei Rahmeneinheiten (3,4) gleich ausgestaltet sind.

2. Klimagerät nach Anspruch 1,
wobei die Rahmeneinheiten (3, 4) jeweils einen inneren Rand (13) aufweisen, der jeweils eine Innenaussparung (14) umschließt.

3. Klimagerät nach Anspruch 1 oder 2,
wobei die Rahmeneinheiten (3, 4) jeweils mehrere Montageaussparungen (15) zur Aufnahme von Montageelementen (5) aufweisen, und
wobei zumindest eine Montageaussparung (15) eine Fixierung eines eingebrachten Montageelements (5) erlaubt.

4. Klimagerät nach Anspruch 3,
wobei sich die Fixierung durch Form- und/oder Kraftschluss zwischen der Montageaussparung (15) und dem Montageelement (5) ergibt.

5. Klimagerät nach Anspruch 3 oder 4,
wobei sich die Fixierung dadurch ergibt, dass der Montageaussparung (15) ein Klemmhaken (150) zugeordnet sind.

6. Klimagerät nach einem der Ansprüche 3 bis 5,
wobei mindestens eine Montageaussparung (15) als durchgehende Aussparung ausgestaltet ist, welche auf der ersten Seite (11) der Rahmeneinheit (4) eine Geometrie aufweist, die sich von der Geometrie auf der zweiten Seite (12) der Rahmeneinheit (4) unterscheidet.

7. Klimagerät nach einem der Ansprüche 1 bis 6,
wobei die Rahmeneinheiten (3, 4) auf mindestens einer Seite (11, 12) jeweils mindestens ein Versteifungselement (19) aufweisen.

8. Klimagerät nach Anspruch 7,
wobei mehrere Versteifungselemente (19) vorhanden sind, und
wobei die Versteifungselemente (19) Materialanhäufungen mit einer im Wesentlichen identischen Geometrie sind.

9. Klimagerät nach Anspruch 7 oder 8,
wobei das Versteifungselement (19) als zumindest teilweise ringförmige Umfassung einer Montageaussparung (15) mit sich sternförmig anschließenden Stegen ausgestaltet ist.

10. Klimagerät nach einem der Ansprüche 7 bis 9,
wobei das Versteifungselement (19) als Quertraverse ausgestaltet ist.

11. Klimagerät nach einem der Ansprüche 1 bis 10,
wobei die Rahmeneinheiten (3, 4) auf einer Seite (11, 12) jeweils mindestens eine Vertiefung (16) für eine Dichtkomponente aufweisen.

12. Klimagerät nach einem der Ansprüche 1 bis 11,
wobei die Rahmeneinheiten (3, 4) auf einer Seite (11, 12) jeweils mindestens eine Abdichtstruktur (17) aufweisen, die als mindestens eine Erhebung ausgestaltet ist.

13. Klimagerät nach Anspruch 12,
wobei auf einer Außenseite der Abdichtstruktur (17) mindestens eine Freifläche (20) vorhanden ist, welche nach außen hin offen und vorzugsweise geneigt ist.

14. Klimagerät nach einem der Ansprüche 1 bis 13,
wobei die Rahmeneinheiten (3, 4) auf einer Seite (11, 12) jeweils mindestens einen entfernbaren Dom (18) aufweisen.

15. Klimagerät nach einem der Ansprüche 1 bis 14,
wobei die Rahmeneinheiten (3, 4) auf einer Seite (11, 12) jeweils mindestens eine Hinweisvorrichtung (21) aufweisen.

16. Klimagerät nach einem der Ansprüche 1 bis 15,
wobei die Rahmeneinheiten (3, 4) jeweils einteilige Kunststoffspritzgussbauteile sind.

## Claims

1. An air conditioning unit for installation on a roof (101),
comprising a housing (1), an indoor air distributor (2), and two frame units (3, 4),
wherein each frame unit (3, 4) has a first side (11) and a second side (12),
wherein in an installed state, the two frame units (3, 4) are arranged between the housing (1) and the indoor air distributor (2), and one frame unit serves as an upper frame unit (3) and the other frame unit serves as a lower frame unit (4), and
wherein in the installed state, the first sides (11) of the two frame units (3, 4) face each other, and the second side (12) of the upper frame unit (3) faces the housing (1) and the second side (12) of the lower frame unit (4) faces the indoor air distributor (2), **characterized in that**
the two frame units (3, 4) are of identical design.

2. The air conditioning unit according to claim 1,
wherein the frame units (3, 4) each have an inner edge (13) which each encloses an inner recess (14).

3. The air conditioning unit according to claim 1 or 2,
wherein the frame units (3, 4) each have a plurality of mounting recesses (15) for receiving mounting elements (5), and
wherein at least one mounting recess (15) allows an inserted mounting element (5) to be fixed in place.

4. The air conditioning unit according to claim 3,
wherein the fixing is obtained by a form fit and/or a force fit between the mounting recess (15) and the mounting element (5).

5. The air conditioning unit according to claim 3 or 4,
wherein the fixing is obtained in that a clamping hook (150) is associated with the mounting recess (15).

6. The air conditioning unit according to any of claims 3 to 5,
wherein at least one mounting recess (15) is shaped as a through-recess, which has a geometry on the first side (11) of the frame unit (4) that differs from the geometry on the second side (12) of the frame unit (4).

7. The air conditioning unit according to any of claims 1 to 6,
wherein the frame units (3, 4) each include at least one stiffening member (19) on at least one side (11, 12).

8. The air conditioning unit according to claim 7,
wherein a plurality of stiffening members (19) are provided, and
wherein the stiffening members (19) are material accumulations having a substantially identical geometry.

9. The air conditioning unit according to claim 7 or 8,
wherein the stiffening member (19) is configured as an at least partially annular enclosure of a mounting recess (15) with webs adjoining in a star shape.

10. The air conditioning unit according to any of claims 7 to 9,
wherein the stiffening member (19) is configured as a crossbar.

11. The air conditioning unit according to any of claims 1 to 10,
wherein on one side (11, 12), the frame units (3, 4) each include at least one depression (16) for a sealing component.

12. The air conditioning unit according to any of claims 1 to 11,
wherein on one side (11, 12), the frame units (3, 4) each include at least one sealing structure (17) which is in the form of at least one raised portion.

13. The air conditioning unit according to claim 12,
wherein on an outer face of the sealing structure (17) at least one clearance surface (20) is provided, which is open toward the outside and preferably inclined.

14. The air conditioning unit according to any of claims 1 to 13,
wherein on one side (11, 12), the frame units (3, 4) each include at least one removable dome (18).

15. The air conditioning unit according to any of claims 1 to 14,
wherein on one side (11, 12), the frame units (3, 4) each include at least one indicating device (21).

16. The air conditioning unit according to any of claims 1 to 15,
wherein the frame units (3, 4) each are one-piece injection-molded plastic components.

## Revendications

1. Appareil de climatisation pour le montage sur un toit (101),
comprenant un boîtier (1), un diffuseur d'air intérieur (2) et deux unités d'encadrement (3, 4),
chaque unité d'encadrement (3, 4) présentant un premier côté (11) et un deuxième côté (12),
les deux unités d'encadrement (3, 4), dans un état monté, étant agencées entre le boîtier (1) et le diffuseur d'air intérieur (2), et une unité d'encadrement servant d'unité d'encadrement supérieure (3), et l'autre unité d'encadrement servant d'unité d'encadrement inférieure (4), et
les premiers côtés (11) des deux unités d'encadrement (3,4), à l'état monté, étant tournés l'un vers l'autre, et le deuxième côté (12) de l'unité d'encadrement supérieure (3) étant tourné vers le boîtier (1), et le deuxième côté (12) de l'unité d'encadrement inférieure (4) étant tourné vers le diffuseur d'air intérieur (2), **caractérisé en ce que** les deux unités d'encadrement (3, 4) sont réalisées de manière identique.

2. Appareil de climatisation selon la revendication 1,
les unités d'encadrement (3, 4) présentant chacune un bord intérieur (13) entourant respectivement un évidement intérieur (14).

3. Appareil de climatisation selon la revendication 1 ou 2,
les unités d'encadrement (3, 4) présentant chacune une pluralité d'évidements de montage (15) pour la réception d'éléments de montage (5), et
au moins un évidement de montage (15) permettant une fixation d'un élément de montage (5) introduit.

4. Appareil de climatisation selon la revendication 3,
la fixation résultant d'une coopération de formes et/ou de forces entre l'évidement de montage (15) et l'élément de montage (5).

5. Appareil de climatisation selon la revendication 3 ou **4,**
la fixation résultant de l'association d'un crochet de serrage (150) à l'évidement de montage (15).

6. Appareil de climatisation selon l'une des revendications 3 à 5,
au moins un évidement de montage (15) étant réalisé sous forme d'évidement débouchant présentant du premier côté (11) de l'unité d'encadrement (4) une géométrie qui est différente de la géométrie du deuxième côté (12) de l'unité d'encadrement (4).

7. Appareil de climatisation selon l'une des revendications 1 à 6,
les unités d'encadrement (3, 4) présentant chacune au moins d'un côté (11, 12) au moins un élément de raidissement (19).

8. Appareil de climatisation selon la revendication 7,
une pluralité d'éléments de raidissement (19) étant prévue, et
les éléments de raidissement (19) étant des accumulations de matière de géométrie sensiblement identique.

9. Appareil de climatisation selon la revendication 7 ou 8,
l'élément de raidissement (19) étant réalisé sous forme d'enceinte au moins partiellement annulaire d'un évidement de montage (15) présentant des barrettes qui se joignent en forme d'étoile.

10. Appareil de climatisation selon l'une des revendications 7 à 9,
l'élément de raidissement (19) étant réalisé sous forme de barre transversale.

11. Appareil de climatisation selon l'une des revendications 1 à 10,
les unités d'encadrement (3, 4) présentant chacune d'un côté (11, 12) au moins un creux (16) pour un composant d'étanchéité.

12. Appareil de climatisation selon l'une des revendications 1 à 11,
les unités d'encadrement (3, 4) présentant chacune d'un côté (11, 12) au moins une structure d'étanchement (17) réalisée sous forme d'au moins un tronçon surélevé.

13. Appareil de climatisation selon la revendication 12,
au moins une surface libre (20) ouverte vers l'extérieur et de préférence inclinée étant prévue sur une face extérieure de la structure d'étanchement (17).

14. Appareil de climatisation selon l'une des revendications 1 à 13,
les unités d'encadrement (3, 4) présentant chacune d'un côté (11, 12) au moins un dôme (18) amovible.

15. Appareil de climatisation selon l'une des revendications 1 à 14,
les unités d'encadrement (3, 4) présentant chacune d'un côté (11, 12) au moins un dispositif indicateur (21).

16. Appareil de climatisation selon l'une des revendications 1 à 15,
les unités d'encadrement (3, 4) étant chacune des composants en une seule pièce en matière plastique et moulés par injection.
